# EUROPÄISCHE PATENTSCHRIFT

(11) **EP 4 184 145 B1**
(45) Veröffentlichungstag und Bekanntmachung des Hinweises auf die Patenterteilung: **30.08.2023**
(21) Anmeldenummer: 21208702.7
(22) Anmeldetag: 17.11.2021
(51) Int. Cl.: G01B 11/24, G01N 13/02

(54) **VORRICHTUNG ZUR ERFASSUNG EINER GEOMETRIE EINES AUF EINER PROBENOBERFLÄCHE ANGEORDNETEN TROPFENS**
DEVICE FOR DETECTING THE GEOMETRY OF A DROPLET ARRANGED ON A SAMPLE SURFACE
DISPOSITIF DE DÉTERMINATION D'UNE GÉOMÉTRIE D'UNE GOUTTE DISPOSÉE SUR UNE SURFACE ÉCHANTILLON

(43) Veröffentlichungstag der Anmeldung: 24.05.2023
(73) Patentinhaber: KRÜSS GmbH, Wissenschaftliche Laborgeräte, 22453 Hamburg (DE)
(72) Erfinder: BUCHHOLZ, Alexander, 22846 Norderstedt (DE); FRIEDRICH, Bernd, 25474 Hasloh (DE); KORDTS, Arne, 20251 Hamburg (DE); FUCKNER, Timo, 22335 Hamburg (DE)
(74) Vertreter: Hauck Patentanwaltspartnerschaft mbB

(56) Entgegenhaltungen:
- WO-A1-2020/176394

## Beschreibung

Die Erfindung betrifft eine Vorrichtung zur Erfassung einer Geometrie eines auf einer Probenoberfläche angeordneten Tropfens. Durch das Erfassen einer Geometrie eines Tropfens einer bekannten Flüssigkeit auf einer zu charakterisierenden Probenoberfläche sind Rückschlüsse auf die Eigenschaften der Probenoberfläche möglich, weil diese Eigenschaften die Wechselwirkung mit der aufgebrachten Flüssigkeit bestimmen.

Eine in diesem Zusammenhang häufig verwendete geometrische Eigenschaft des Tropfens ist der sogenannte Kontaktwinkel, der sich im Kontakt einer definierten Testflüssigkeit mit der Probenoberfläche einstellt. Zur Bestimmung des Kontaktwinkels ist beispielsweise aus der Druckschrift DE 197 54 765 C1 eine Vorrichtung bekannt geworden, mit der aus seitlicher Blickrichtung ein Schattenbild des Tropfens aufgenommen wird. In dem Schattenbild sind die Kontur des Tropfens sowie die Grenzfläche zur Probe erkennbar, sodass der Kontaktwinkel dem Schattenbild direkt entnommen werden kann.

Aus der Druckschrift EP 2 093 557 B1 ist eine Vorrichtung mit den Merkmalen des Oberbegriffs des Anspruchs 1 bekannt geworden. Zur Bestimmung eines Kontaktwinkels wird der Tropfen von oben mit einer Kamera betrachtet. In einem seitlichen Abstand von einer optischen Achse der Kamera, auf der sich der Tropfen befinden muss, sind zwei oder drei Lichtquellen angeordnet. Mit der Kamera werden Bilder der Lichtreflexe der Lichtquellen erfasst. Ausgewertet wird der Abstand der zugehörigen Bildpunkte von der optischen Achse oder voneinander. Bei bekanntem Abstand zur Probenoberfläche kann aus dieser Abstandsinformation der Radius des Tropfens berechnet werden.

Aus der Druckschrift US 9,423,245 B2 ist eine Vorrichtung zur Vermessung der Oberflächenkontur von Objekten mit spiegelnden Oberflächen bekannt geworden. Die Vorrichtung weist zwei Kameras und einen Leuchtschirm auf, der das Objekt halbkreisförmig umgibt. Mit den Kameras wird eine Reflexion einer wechselnden, von dem Leuchtschirm erzeugten Helligkeitsverteilung erfasst.

Aus der Druckschrift WO 2020/176394 A1 ist eine Vorrichtung zur Messung der Oberflächengeometrie von optischen Komponenten bekannt geworden, bei dem die Reflexion einer auf einem Schirm gezeigten Helligkeitsverteilung an der optischen Komponente mit einer Kamera erfasst wird. Um einen großen Raumwinkelbereich abzudecken, wird die optische Komponente auf einem beweglichen Probentisch angeordnet und zwischen mehreren, aufeinanderfolgenden Aufnahmen schrittweise gedreht.

Davon ausgehend ist es die Aufgabe der Erfindung, eine Vorrichtung zur Verfügung zu stellen, mit der die Erfassung einer Geometrie eines auf einer Probenoberfläche angeordneten Tropfens besonders einfach und in einer Vielzahl unterschiedlicher Anwendungssituationen möglich ist. Diese Aufgabe wird gelöst durch die Vorrichtung mit den Merkmalen des Anspruchs 1. Vorteilhafte Ausgestaltungen sind in den Unteransprüchen angegeben.

Die Vorrichtung dient zur Erfassung einer Geometrie eines auf einer Probenoberfläche angeordneten Tropfens und weist folgendes auf:
- ein Gehäuse mit einer Aussparung, die bei Anordnung des Gehäuses an einer ebenen Probenoberfläche einen von einer Umgebung abgegrenzten Hohlraum bildet,
- eine Dosiereinrichtung, die dazu ausgebildet ist, Flüssigkeit in Form eines Tropfens auf der Probenoberfläche anzuordnen, wobei die Dosiereinrichtung ein Flüssigkeitsreservoir und eine innerhalb des Hohlraums angeordnete Austrittsöffnung aufweist,
- eine Vielzahl von Lichtquellen, die in dem Hohlraum angeordnet sind, wobei die Lichtquellen von einem Punkt einer ebenen Probenoberfläche aus betrachtet einen Raumwinkel von mindestens π/2 sr abdecken, und
- eine Kamera, die dazu ausgebildet ist, eine Reflexion der Lichtquellen an der Oberfläche des Tropfens zu erfassen.

Mit der Vorrichtung kann die Geometrie des Tropfens bestimmt werden, indem auf Grundlage der mit der Kamera erfassten Reflexionen der Lichtquellen und der bekannten Orte, an denen die Lichtquellen angeordnet sind, Punkte auf der Tropfenoberfläche ermittelt werden. Auf diese Weise kann insbesondere ein Kontaktwinkel des Tropfens bestimmt werden. Wie diese Auswertung im Einzelnen ausgeführt werden kann, ist in der Druckschrift EP 3 910 314 A1 beschrieben.

Die Vorrichtung kann auch als Messkopf bezeichnet werden. Sie kann über eine geeignete Datenverbindung, drahtlos oder kabelgebunden, mit einer Auswerteeinrichtung verbunden werden.

Bei der vorgesehenen Verwendung der Vorrichtung wird das Gehäuse an der Oberfläche einer Probe angeordnet. Im einfachsten Fall geschieht dies durch Auflegen des Gehäuses auf eine Probe, wobei die Anordnung des Gehäuses relativ zur Probe durch definierte Anlageflächen am Gehäuse vorgegeben sein kann. Das Gehäuse kann insbesondere drei Kontaktpunkte aufweisen, die an einer Unterseite des Gehäuses angeordnet und mit der Probenoberfläche in Kontakt bringbar sind, um das Gehäuse in einer definierten Stellung relativ zu der Probenoberfläche anzuordnen. Ist die Probenoberfläche eben oder fast eben, ist der zwischen Gehäuse und Probenoberfläche im Bereich der Aussparung befindliche Hohlraum von der Umgebung abgegrenzt. Das bedeutet, dass der Hohlraum zumindest teilweise gegenüber von außen einfallendem Licht, welches die Messung beeinträchtigen könnte, abgeschirmt ist. Ein vollständiger oder gar hermetischer Abschluss des Hohlraums ist nicht erforderlich und bei Proben mit einer nicht vollständig ebenen Oberfläche in der Regel auch gar nicht möglich. Einbezogen ist insbesondere eine Anordnung, bei der zwischen Gehäuse und Probenoberfläche ein Spalt von zum Beispiel einigen Millimetern verbleibt, was in vielen Fällen unproblematisch ist.

Nachdem das Gehäuse an der Probenoberfläche angeordnet worden ist, kann mit der Dosiereinrichtung ein Flüssigkeitstropfen auf die Probenoberfläche aufgebracht werden. Unabhängig von der Ausgestaltung der Dosiereinrichtung geschieht dies über eine innerhalb des Hohlraums angeordnete Austrittsöffnung. Dadurch kann das nachfolgend vorgesehene Erfassen von Reflexionen der Lichtquellen an der Tropfenoberfläche mit der Kamera unmittelbar nach dem Aufbringen des Tropfens beginnen, insbesondere ohne dass die Anordnung des Gehäuses an der Probenoberfläche zuvor verändert werden müsste.

Die Lichtquellen befinden sich innerhalb des Hohlraums und sind relativ zu dem Gehäuse fest angeordnet. Die Lichtquellen sind so beschaffen, dass anhand der mit der Kamera erfassten Reflexionen des von den Lichtquellen ausgesendeten Lichts eine möglichst exakte Bestimmung der Geometrie der Tropfenoberfläche möglich ist. Hierfür sind die Lichtquellen im Idealfall punktförmig. In der Praxis weisen die Lichtquellen eine begrenzte räumliche Ausdehnung auf, die allerdings so bemessen sein sollte, dass jede Lichtquelle von allen benachbarten Lichtquellen beabstandet und im Bild der Kamera klar von diesen abgegrenzt erscheint.

Die Vorrichtung kann mit unterschiedlichen Anzahlen von Lichtquellen realisiert werden. Im Allgemeinen kann die Geometrie des Tropfens mit einer größeren Anzahl von Lichtquellen präziser erfasst werden, wobei bei zu vielen Lichtquellen die Gefahr besteht, dass einzelne Lichtreflexe nicht mehr zuverlässig einzelnen Lichtquellen zugeordnet werden können. Es kann zum Beispiel mit mindestens 5, mindestens 7, mindestens 10, mindestens 15, mindestens 20, mindestens 30 oder mindestens 40 Lichtquellen gearbeitet werden. In der Praxis hat sich eine Anzahl im Bereich von 40 bis 200 Lichtquellen bewährt.

Ferner sind die Lichtquellen so angeordnet, dass sie einen Raumwinkel von mindestens π/2 sr abdecken, und zwar betrachtet von einem Punkt einer ebenen Probenoberfläche aus. Dieser Punkt kann insbesondere dort angeordnet sein, wo mit der Dosiereinrichtung ein Tropfen aufgebracht wird. In jedem Fall befindet sich der Punkt, von dem aus die Raumwinkelabdeckung der Lichtquellen betrachtet wird, in derjenigen Ebene, in der sich eine ebene Probenoberfläche befindet, wenn das Gehäuse an dieser Probenoberfläche angeordnet wird. Die Lage dieser Ebene kann durch die Geometrie der Vorrichtung, insbesondere durch Anlageflächen oder Anlagepunkte des Gehäuses bestimmt sein. Sie kann insbesondere mit einer Unterseite des Gehäuses zusammenfallen. Dass die Lichtquellen einen bestimmten Raumwinkel abdecken, bedeutet, dass eine von der Anordnung der Lichtquellen definierte Fläche von dem Punkt aus unter diesem Raumwinkel erscheint. Die Fläche kann insbesondere eine Umrandungslinie aufweisen, die alle Lichtquellen einschließt und durch geradlinige Verbindungen zwischen benachbarten, am weitesten außen angeordneten Lichtquellen entsteht. Dieser Raumwinkel beträgt bei der Erfindung mindestens π/2 sr, kann jedoch bevorzugt auch mindestens π sr oder mindestens 3/2 π sr betragen, sich also annähernd über den gesamten Halbraum (entsprechend einem Raumwinkel von 2 π sr) oberhalb der Probenoberfläche erstrecken.

Die Vorrichtung kann weiterhin eine Steuerung zur Ansteuerung der Lichtquellen aufweisen, wobei die Steuerung insbesondere dazu ausgebildet sein kann, die Lichtquellen einzeln und/oder in Gruppen ein- und auszugeschalten.

Mit der erfindungsgemäßen Vorrichtung ist es möglich, die Geometrie eines Flüssigkeitstropfens sehr einfach und wahlweise weitgehend automatisiert zu erfassen. Hierzu trägt zunächst bei, dass durch das Gehäuse mit der Aussparung ein von der Umgebung abgeschirmter Hohlraum geschaffen wird. Durch die Integration von Kamera, Dosiereinrichtung und Lichtquellen in die Vorrichtung kann die Messung sehr einfach und, falls gewünscht, teilweise oder vollständig automatisiert innerhalb dieses abgegrenzten Hohlraums erfolgen.

Durch die über einen großen Raumwinkel verteilte Anordnung der Lichtquellen können Tropfen mit beliebigen Kontaktwinkeln vermessen werden. Eine Justierung oder sonstige Anpassung der Vorrichtung an unterschiedliche Anwendungssituationen ist daher nicht erforderlich bzw. kann ebenfalls automatisiert erfolgen, beispielsweise durch gezielte Ansteuerung bestimmter Lichtquellen.

In einer Ausgestaltung umfassen die Lichtquellen mehrere erste Lichtquellen und mehrere zweite Lichtquellen, wobei die ersten Lichtquellen kleiner und/oder in kleineren Abständen voneinander angeordnet sind, als die zweiten Lichtquellen. Es kann dadurch mit zwei unterschiedlichen Gruppen von Lichtquellen gearbeitet werden, die für unterschiedliche Anwendungsfälle optimiert sind. Bei Tropfen, die kleine Kontaktwinkel aufweisen, ist die Tropfenoberfläche weniger gekrümmt als bei Tropfen mit größeren Kontaktwinkeln. Der Raumwinkelbereich, aus dem Licht durch Reflexion an der Tropfenoberfläche von der Kamera erfasst wird, ist daher bei kleinen Kontaktwinkeln viel kleiner als bei großen Kontaktwinkeln. Für eine exakte Erfassung der Geometrie ist es daher wichtig, eine ausreichende Anzahl von Lichtquellen in dem relevanten Raumwinkelbereich anzuordnen. Darum ist es sinnvoll, die ersten Lichtquellen in relativ kleinen Abständen voneinander anzuordnen und die ersten Lichtquellen selbst relativ klein auszuführen. Bei großen Kontaktwinkeln ist es hingegen sinnvoll, die zweiten Lichtquellen einzusetzen, die in größeren Abständen voneinander angeordnet sind und auch selbst größer ausgeführt sein können, als die ersten Lichtquellen. Insbesondere können die ersten Lichtquellen so angeordnet sein, dass der von einem Punkt einer ebenen Probenoberfläche aus betrachtete Raumwinkelbereich, der von den ersten Lichtquellen abgedeckt ist, nicht größer ist als π/4 sr. Insbesondere kann der Raumwinkelbereich im Bereich von 1/16 π sr bis π/4 sr liegen. Insbesondere kann mit mindestens 5 ersten Lichtquellen und mindestens 5 zweiten Lichtquellen, mit mindestens 10 ersten Lichtquellen und mindestens 10 zweiten Lichtquellen, mit mindestens 15 ersten Lichtquellen und mindestens 15 zweiten Lichtquellen oder mit mindestens 20 ersten Lichtquellen und mindestens 20 zweiten Lichtquellen gearbeitet werden.

In einer Ausgestaltung sind die ersten Lichtquellen so angeordnet, dass sie durch Reflexion an einer spiegelnden, ebenen Probenoberfläche, an der das Gehäuse angeordnet ist, auf einen Sensor der Kamera abgebildet werden, und/oder die zweiten Lichtquellen sind so angeordnet, dass sie durch Reflexion an einer spiegelnden, ebenen Probenoberfläche, an der das Gehäuse angeordnet ist, nicht auf einen Sensor der Kamera abgebildet werden. Bezogen auf ein Einfallslot sind die ersten Lichtquellen also der Kamera gegenüberliegend angeordnet. Ob die Anordnung der Lichtquellen der Ausgestaltung entspricht, kann beispielsweise durch Anordnung des Gehäuses an einem Spiegel überprüft werden. In diesem Fall werden mit der Kamera also Reflexionen der Lichtquellen an der spiegelnden, ebenen Oberfläche selbst, nicht an der Oberfläche eines Tropfens, erfasst. Die zweiten Lichtquellen werden bevorzugt so angeordnet, dass sie außerhalb des Raumwinkelbereichs angeordnet sind, der den ersten Lichtquellen vorbehalten ist.

In einer Ausgestaltung sind die Lichtquellen oder ein Teil der Lichtquellen in einer abwickelbaren Fläche angeordnet, insbesondere in einer Mantelfläche eines Zylinders oder Kegels. Grundsätzlich ist die Anordnung der Lichtquellen in dem Hohlraum beliebig, solange der erforderliche Raumwinkelbereich abgedeckt wird. Beispielsweise kann die Aussparung halbkugelförmig ausgebildet sein und/oder die Lichtquellen können in einem gleichmäßigen Abstand von dem Tropfen auf einer Kugelfläche angeordnet sein. Dies ist jedoch konstruktiv aufwendig, insbesondere weil die Lichtquellen hierfür in der Regel einzeln befestigt werden müssen. Durch die Anordnung der Lichtquellen oder eines Teils der Lichtquellen in einer abwickelbaren Fläche können die Lichtquellen auf einem geeigneten, flächigen Träger angeordnet und anschließend durch Anordnen des Trägers in der abwickelbaren Fläche in ihre endgültige Position gebracht werden.

In einer Ausgestaltung sind die Lichtquellen oder ein Teil der Lichtquellen auf einer flexiblen Platine angeordnet. Eine flexible Platine ist ein Beispiel eines Trägers, der nach Bestückung mit den Lichtquellen in der abwickelbaren Fläche angeordnet werden kann. Die Herstellung der Vorrichtung vereinfacht sich durch Verwendung einer flexiblen Platine erheblich, insbesondere im Vergleich zu einer Einzelbefestigung der Lichtquellen. Die flexible Platine kann insbesondere zur Fixierung ihrer Anordnung relativ zu dem Gehäuse flächig verklebt sein, beispielsweise unmittelbar mit einer Wandung der Aussparung oder mit einem sonstigen Träger, etwa einem entsprechend gebogenen Blech. Durch das flächige Verkleben der flexiblen Platine wird eine exakte und dauerhafte Fixierung sämtlicher, auf der flexiblen Platine angeordneten Lichtquellen erreicht, was für eine präzise Erfassung der Geometrie des Tropfens vorteilhaft ist.

In einer Ausgestaltung ist eine Ansteuerungselektronik für die auf der flexiblen Platine angeordneten Lichtquellen entweder auf einem nicht-gekrümmten Teil der flexiblen Platine angeordnet oder auf einem von der flexiblen Platine verschiedenen Träger, der über elektrische Leitungen mit der flexiblen Platine verbunden ist. Als Lichtquellen können für alle vorstehend beschriebenen Ausgestaltungen zum Beispiel diskrete Lichtquellen verwendet werden, insbesondere LEDs, in Verbindung mit einer flexiblen Platine insbesondere in einer oberflächenmontierten Bauform (SMD). Derartige Lichtquellen können sehr kleine Abmessungen aufweisen in der Größenordnung von beispielsweise 1 mm oder weniger. Durch diese Miniaturisierung sind relativ geringe Krümmungsradien der flexiblen Platine möglich. Die für die Ansteuerung der Lichtquellen vorgesehene Ansteuerungselektronik weist in der Regel größere Abmessungen auf. Bei einer Anordnung der Ansteuerungselektronik auf der flexiblen Platine ist nur eine weniger ausgeprägte Krümmung möglich, was unter anderem zu größeren Abständen zwischen den Lichtquellen und dem Tropfen führen kann. Durch die Auslagerung der Ansteuerungselektronik ist daher ein kompakterer Aufbau der Vorrichtung möglich.

Grundsätzlich kann ein Teil der Lichtquellen in einer ebenen Fläche angeordnet sein, insbesondere auf einer starren Platine. Beispielsweise kann die Aussparung unter Verwendung mehrerer starrer Platinen über den erforderlichen Raumwinkelbereich hinweg mit Lichtquellen ausgestattet werden, beispielsweise mit vier starren Platinen, die an Seitenwänden der Aussparung angeordnet sind, und einer oder zwei weiteren starren Platinen, die an einer Decke der Aussparung angeordnet sind.

In einer Ausgestaltung sind die Lichtquellen oder ein Teil der Lichtquellen Bildpunkte eines Bildschirms, insbesondere eines OLED-Bildschirms. Auf diese Weise kann anstatt mit vielen diskreten Lichtquellen mit einem Bildschirm die gewünschte Beleuchtungssituation geschaffen werden. Natürlich können auch diskrete Lichtquellen mit einem Bildschirm kombiniert werden oder es können zwei oder mehr Bildschirme eingesetzt werden. Es können für jede Lichtquelle einzelne Bildpunkte des Bildschirms erleuchtet werden oder Gruppen von Bildpunkten, die jeweils eine erleuchtete Fläche bilden.

In einer Ausgestaltung strahlen die Lichtquellen oder ein Teil der Lichtquellen Infrarotlicht aus. Grundsätzlich kann bei der Erfindung mit Lichtquellen beliebiger Wellenlängen gearbeitet werden, insbesondere im sichtbaren Bereich. Die Verwendung von Infrarotlicht kann bei entsprechend selektiven Kameras Störeinflüsse verringern. Außerdem können störende Reflexionen aus dem Inneren des Tropfens, die insbesondere durch Reflexion an der Probenoberfläche unterhalb des Tropfens auftreten können, reduziert werden, weil viele Flüssigkeiten Infrarotlicht stärker absorbieren als Licht anderer Wellenlängenbereiche.

In einer Ausgestaltung ist die Dosiereinrichtung dazu ausgebildet, die Flüssigkeit als kontinuierlichen Strahl oder Folge von Tröpfchen auf die Probenoberfläche aufzubringen. Eine Tropfendosierung in dieser Form ist auf dem Gebiet der Kontaktwinkelmessung bekannt und zeichnet sich durch eine hohe Geschwindigkeit und Robustheit aus.

In einer Ausgestaltung ist die Dosiereinrichtung dazu ausgebildet, die Flüssigkeit entlang einer im Wesentlichen senkrecht zur Probenoberfläche verlaufenden Richtung auf die Probenoberfläche zu transportieren. Durch den Transport im Wesentlichen senkrecht zur Probenoberfläche kann der Tropfen von der Dosiereinrichtung so aufgebracht werden, dass er eine weitgehend symmetrische Form annimmt. Weicht die Transportrichtung zu stark von der Senkrechten ab, erhält der Tropfen in vielen Fällen eine unerwünschte Asymmetrie. In der Praxis kann insbesondere mit einem Winkel im Bereich von 75° bis 105° gearbeitet werden, bevorzugt in einem Bereich von 80° bis 100°, insbesondere in einem Bereich von 85° bis 95°. Der Flüssigkeitstransport kann entweder als kontinuierlicher Strahl oder Folge von Tröpfchen entlang der genannten Richtung erfolgen, aber auch mit einem auf dem Gebiet der Kontaktwinkelmessung etablierten Verfahren, bei dem der Tropfen an einer Dosiereinrichtung hängend ausgebildet und durch Annähern der Dosiereinrichtung entlang der genannten Richtung an die Probenoberfläche auf der Probenoberfläche abgesetzt wird. In allen Fällen besteht ein besonderer Vorteil darin, dass durch das senkrechte Aufbringen eine optimale, symmetrische Geometrie des Tropfens erreicht wird.

In einer Ausgestaltung ist die Austrittsöffnung an einem Ende einer Dosierkanüle ausgebildet, die in den Hohlraum hineinragt und/oder die Dosiereinrichtung weist einen beweglichen Abschnitt auf, an dem die Austrittsöffnung angeordnet ist, wobei der bewegliche Abschnitt ganz oder teilweise aus dem Hohlraum heraus bewegbar ist. In beiden Fällen bleibt der Hohlraum frei von weiteren Elementen der Dosiereinrichtung. Dadurch wird vermieden, dass die Dosiereinrichtung im Blickfeld der Kamera befindliche Lichtquellen abschattet.

In einer Ausgestaltung weist das Gehäuse einen an dem Gehäuse befestigten Adapter auf, wobei der Adapter eine Aufnahme für eine Probe mit einer definierten Geometrie aufweist. Durch Verwendung eines solchen Adapters kann das Gehäuse stets in eine definierte Anordnung relativ zu einem bestimmten Probentyp gebracht werden. Insbesondere können verschiedene Adapter vorgesehen sein, die jeweils Aufnahmen für unterschiedliche, standardisierte Probengeometrien aufweisen.

In einer Ausgestaltung weist die Vorrichtung eine weitere Kamera auf, die dazu ausgebildet ist, eine Reflexion der Lichtquellen an der Tropfenoberfläche zu erfassen, wobei die Kamera und die weitere Kamera unterschiedliche Blickrichtungen aufweisen. Durch diese Ausgestaltung mit zwei Kameras steht für die Ermittlung der Geometrie des Tropfens eine größere Anzahl von Lichtreflexionen zur Verfügung, weil einige oder viele der Lichtquellen, idealerweise alle, durch Reflexion auf beide Kameras abgebildet werden. Die Genauigkeit der Geometrieerfassung kann dadurch verbessert werden. Die Blickrichtungen der beiden Kameras können sich insbesondere um 10° oder mehr voneinander unterscheiden.

In einer Ausgestaltung weist die Vorrichtung eine Abstandsmesseinrichtung zur Bestimmung eines Abstands der Vorrichtung von einer Probenoberfläche auf. Die Abstandsmesseinrichtung kann insbesondere einen Laser aufweisen, dessen auf die Probenoberfläche gerichtetes Licht von der Kamera und/oder von der weiteren Kamera erfasst wird. Der Laser kann insbesondere ein Kreuzlinienlaser sein. Für viele Messaufgaben ist es von Vorteil, wenn der Abstand zwischen Probenoberfläche und Messvorrichtung bekannt ist. Insbesondere können Abweichungen infolge einer nicht ebenen Probenoberfläche durch eine solche Abstandsmessung berücksichtigt werden.

In einer Ausgestaltung weist die Kamera einen Sensor mit einer Sensorebene und ein Objektiv mit einer Objektivebene auf, wobei sich die Sensorebene, die Objektivebene und eine Objektebene, die einer Probenoberfläche, an der das Gehäuse angeordnet ist, entspricht, in einer gemeinsamen Geraden schneiden. Diese besondere Anordnung entspricht der Scheimpflug` schen Regel und führt dazu, dass auch bei einer schräg zu der Probenoberfläche ausgerichteten Kamera die gesamte Probenoberfläche scharf auf den Sensor abgebildet werden kann.

Die Erfindung umfasst ebenfalls ein Verfahren zur Erfassung einer Geometrie eines auf einer Probenoberfläche angeordneten Tropfens mit einer Vorrichtung nach einem der Ansprüche 1 bis 15. Das Verfahren weist die folgenden Schritte auf:
- das Gehäuse wird an einer Probenoberfläche angeordnet,
- mit der Dosiereinrichtung wird ein Flüssigkeitstropfen auf der Probenoberfläche angeordnet, und
- mit der Kamera wird eine Reflexion der Lichtquellen an der Tropfenoberfläche erfasst.

Bei dem Verfahren sind die Lichtquellen insbesondere so angeordnet, dass sie von demjenigen Punkt der Probenoberfläche aus betrachtet, an dem der Tropfen angeordnet ist, einen Raumwinkel von mindestens π/2 sr abdecken.

Nachfolgend wird die Erfindung anhand von in Figuren dargestellten Ausführungsbeispielen näher erläutert. Es zeigen:
- Fig. 1: eine schematische Darstellung einer Vorrichtung zur Erfassung einer Geometrie eines auf einer Probenoberfläche angeordneten Tropfens im Querschnitt, und
- Fig. 2: eine Fotografie einer anderen Vorrichtung zur Erfassung einer Geometrie eines auf einer Probenoberfläche angeordneten Tropfens.

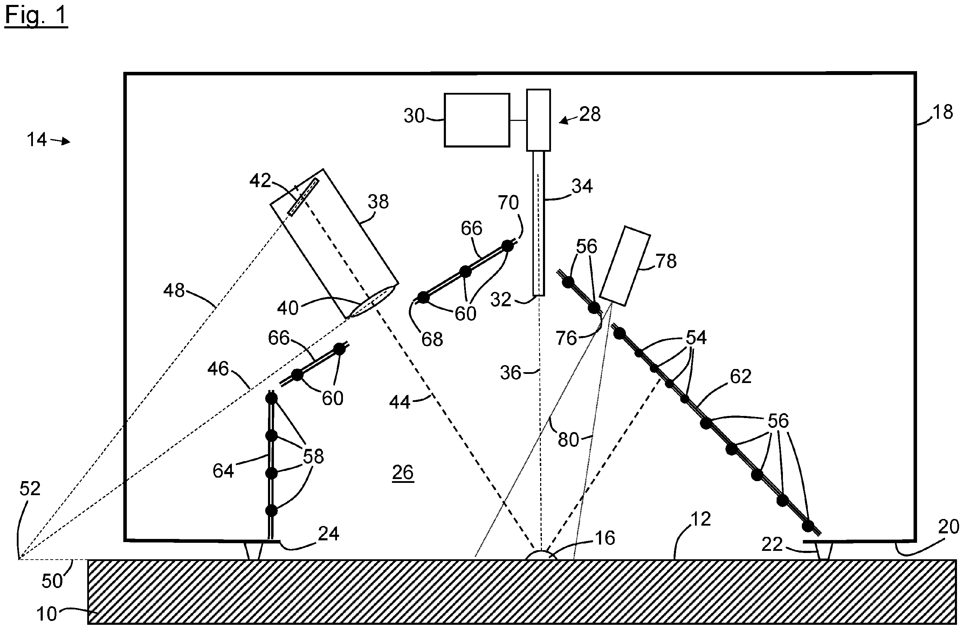

Figur 1 zeigt eine Probe 10 mit einer ebenen Probenoberfläche 12, an der eine Vorrichtung 14 angeordnet ist. Die Vorrichtung 14 dient zur Erfassung einer Geometrie eines auf der Probenoberfläche 12 angeordneten Tropfens 16.

Die Vorrichtung 14 umfasst ein Gehäuse 18, an dessen Unterseite 20 Füße 22 angeordnet sind, die jeweils einen Kontaktpunkt bilden und die in der gezeigten Anordnung mit der Probenoberfläche 12 in Kontakt stehen. Das Gehäuse 18 befindet sich dadurch in einer definierten Stellung relativ zu der Probenoberfläche 12.

Das Gehäuse 18 weist eine Aussparung 24 auf, die in der Figur 1 nicht im Einzelnen dargestellt ist. Sie bildet bei Anordnung des Gehäuses 18 an der Probenoberfläche 12 einen Hohlraum 26 aus, der von der Umgebung abgegrenzt ist.

Die Vorrichtung 14 weist außerdem eine Dosiereinrichtung 28 auf. Die Dosiereinrichtung 28 hat ein Flüssigkeitsreservoir 30 und eine Austrittsöffnung 32, die an einem unteren Ende einer Dosierkanüle 34 angeordnet ist und die in den Hohlraum 26 hineinragt. Mit der Dosiereinrichtung 28 kann Flüssigkeit aus dem Flüssigkeitsreservoir 30 in Form eines kontinuierlichen Strahls auf die Probenoberfläche 12 aufgebracht werden. Die Strahlrichtung 36 ist dabei etwa senkrecht zur der Probenoberfläche 12 ausgerichtet.

Die Vorrichtung 14 umfasst außerdem eine Kamera 38, die ein Objektiv 40 und einen Sensor 42 aufweist. Eine Blickrichtung 44 der Kamera 38 ist durch eine gestrichelte Linie angedeutet und auf den Tropfen 16 ausgerichtet. In der gezeigten Anordnung befinden sich der Sensor 42 in einer Sensorebene 48, das Objektiv 40 in einer Objektivebene 46 und die Probenoberfläche 12 in einer Objektebene 50. Wie schematisch dargestellt, schneiden sich die drei Ebenen 46, 48, 50 in einer gemeinsamen Geraden 52.

Innerhalb des Hohlraums 36 ist eine Vielzahl von Lichtquellen angeordnet, umfassend mehrere erste Lichtquellen 54 und mehrere zweite Lichtquellen 56, 58, 60. Die ersten Lichtquellen 54 sind kleiner als die zweiten Lichtquellen 56, 58, 60 und auch in kleineren Abständen voneinander angeordnet als die zweiten Lichtquellen 56, 58, 60.

Die ersten Lichtquellen 54 und die zweiten Lichtquellen 56 sind auf einer flexiblen Platine 62 angeordnet, die flächig mit einem nicht dargestellten Trägerteil des Gehäuses 18 verklebt ist. Die flexible Platine 62 verläuft entlang einer Mantelfläche eines elliptischen Zylinders, was im Querschnitt der Figur 1 nicht erkennbar ist.

Die zweiten Lichtquellen 58 sind auf einer ersten starren Platine 64, die zweiten Lichtquellen 60 sind auf einer zweiten starren Platine 66 angeordnet. Die zweite starre Platine 66 weist eine Durchgangsöffnung 68 auf, hinter der die Kamera 38 angeordnet ist. Eine weitere Öffnung 70 befindet sich zwischen der flexiblen Platine 62 und der zweiten starren Platine 66. Durch diese Öffnung 70 hindurch ragt die Dosierkanüle 34 in den Hohlraum 26 hinein.

Auch die flexible Platine 62 weist eine Durchgangsöffnung 76 auf, hinter der ein Kreuzlinienlaser 78 angeordnet ist. Der Kreuzlinienlaser 78 ist so angeordnet, dass er ein Linienkreuz auf die Probenoberfläche 12 im Bereich des Tropfens 16 projiziert, wie durch die Linien 80 angedeutet.

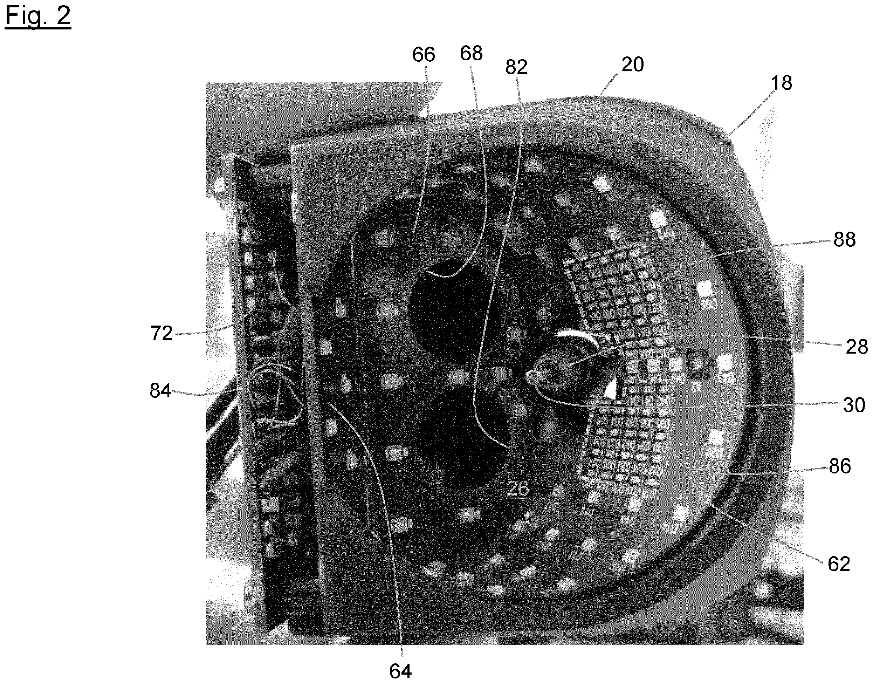

Die Aussparung 24 im Gehäuse 18 wird im Wesentlichen von der ersten starren Platine 64, der zweiten starren Platine 66 und der flexiblen Platine 62 ausgekleidet. Der Hohlraum 26 oberhalb der Probenoberfläche 12 ist annähernd kuppelförmig, wobei die erste starre Platine 64 etwa senkrecht zur Probenoberfläche 12 ausgerichtet ist und die zweite starre Platine 66 einen schräg zur Probenoberfläche 12 angeordneten Deckenabschnitt bildet. Die verbleibende Wandfläche der Aussparung 24 wird von der flexiblen Platine 62 abgedeckt, was besser in der Figur 2 erkennbar ist.

In der Figur 2 ist eine Vorrichtung gezeigt, deren Aufbau im Wesentlichen der Vorrichtung 14 aus Fig. 1 entspricht. Insbesondere gibt es auch hier eine flexible Platine 62, die auf einer abwickelbaren Fläche, nämlich einer elliptischen Zylindermantelfläche, angeordnet ist. Gut erkennbar ist auch ein Gehäuse 18 mit einer Unterseite 20. Die in dem Gehäuse 18 ausgebildete Aussparung 24 wird auch im Beispiel der Fig. 2 im Wesentlichen von einer ersten starren Platine 64 und einer zweiten starren Platine 66 sowie der flexiblen Platine 62 ausgekleidet. Die Anordnung dieser drei Platinen 64, 66, 62 ist so, wie zur Figur 1 beschrieben.

In Figur 2 erkennt man, dass die zweite starre Platine 66 zwei Durchgangsöffnungen 68, 82 aufweist. Hinter der Durchgangsöffnung 68 befindet sich die Kamera 38 (nicht sichtbar) und hinter der Durchgangsöffnung 82 befindet sich eine weitere Kamera (ebenfalls nicht sichtbar). Gut erkennbar ist auch die Dosiereinrichtung 28 mit der Dosierkanüle 34.

Außerdem zeigt Figur 2 eine weitere Platine 84, die auf der von dem Hohlraum 26 abgewandten Seite der ersten starren Platine 64 angeordnet ist und die eine Ansteuerungselektronik (72) enthält. Die ersten Lichtquellen 54 sind in zwei Gruppen matrixartig angeordnet. Die mit einer gestrichelten Linie umrandete erste Gruppe 86 ist so angeordnet, dass bei Anordnung des Gehäuses 18 an einer spiegelnden, ebenen Probenoberfläche 12 das von den zugehörigen ersten Lichtquellen 54 ausgesandte Licht nach Reflexion an der spiegelnden Oberfläche von der Kamera 38 hinter der Durchgangsöffnung 68 erfasst wird. Entsprechend gilt für die ersten Lichtquellen 54 der zweiten Gruppe 88, dass deren Licht in die hinter der anderen Durchgangsöffnung 82 befindliche, weitere Kamera reflektiert wird.

Jede der Gruppen 86, 88 erster Lichtquellen 54 erstreckt sich über einen Raumwinkelbereich von etwa π/12 sr. Die Gesamtheit der ersten und zweiten Lichtquellen 54, 56, 58, 60 erstreckt sich über einen Raumwinkelbereich von annähernd 3/2 π sr. In beiden Fällen wird der Raumwinkelbereich - wie erläutert - von einem Punkt einer ebenen Probenoberfläche 12 aus betrachtet, insbesondere von demjenigen Punkt, auf den der Tropfen 16 aufgebracht wird.

### Liste der Bezugszeichen

- 10: Probe
- 12: Probenoberfläche
- 14: Vorrichtung
- 16: Tropfen
- 18: Gehäuse
- 20: Unterseite
- 22: Fuß
- 24: Aussparung
- 26: Hohlraum
- 28: Dosiereinrichtung
- 30: Flüssigkeitsreservoir
- 32: Austrittsöffnung
- 34: Dosierkanüle
- 36: Strahlrichtung
- 38: Kamera
- 40: Objektiv
- 42: Sensor
- 44: Blickrichtung
- 46: Objektivebene
- 48: Sensorebene
- 50: Objektebene
- 52: gemeinsame Gerade
- 54: erste Lichtquelle
- 56: zweite Lichtquelle
- 58: zweite Lichtquelle
- 60: zweite Lichtquelle
- 62: flexible Platine
- 64: erste starre Platine
- 66: zweite starre Platine
- 68: Durchgangsöffnung
- 70: Öffnung
- 72: Ansteuerungselektronik
- 76: Durchgangsöffnung
- 78: Laser
- 80: Linien
- 82: Durchgangsöffnung
- 84: weitere Platine
- 86: erste Gruppe von ersten Lichtquellen
- 88: zweite Gruppe von ersten Lichtquellen

## Patentansprüche

1. Vorrichtung (14) zur Erfassung einer Geometrie eines auf einer Probenoberfläche (12) angeordneten Tropfens (16), wobei die Vorrichtung (14) folgendes aufweist:
• eine Dosiereinrichtung (28), die dazu ausgebildet ist, Flüssigkeit in Form eines Tropfens (16) auf der Probenoberfläche (12) anzuordnen,
• eine Vielzahl von Lichtquellen (54, 56, 58, 60) und
• eine Kamera (38), die dazu ausgebildet ist, eine Reflexion der Lichtquellen (54, 56, 58, 60) an der Oberfläche des Tropfens (16) zu erfassen, **dadurch gekennzeichnet, dass**
• die Vorrichtung (14) ein Gehäuse (18) mit einer Aussparung (24) aufweist, die bei Anordnung des Gehäuses (18) an einer ebenen Probenoberfläche (12) einen von einer Umgebung abgegrenzten Hohlraum (26) bildet,
• die Lichtquellen in dem Hohlraum (26) angeordnet sind, wobei die Lichtquellen (54, 56, 58, 60) von einem Punkt einer ebenen Probenoberfläche (12) aus betrachtet einen Raumwinkel von mindestens π/2 Steradiant (sr) sr abdecken, und
• die Dosiereinrichtung (28) ein Flüssigkeitsreservoir (30) und eine innerhalb des Hohlraums (26) angeordnete Austrittsöffnung (32) aufweist.

2. Vorrichtung (14) nach Anspruch 1, **dadurch gekennzeichnet, dass** die Lichtquellen (54, 56, 58, 60) mehrere erste Lichtquellen (54) und mehrere zweite Lichtquellen (56, 58, 60) umfassen, wobei die ersten Lichtquellen (54) kleiner und/oder in kleineren Abständen voneinander angeordnet sind als die zweiten Lichtquellen (56, 58, 60).

3. Vorrichtung (14) nach Anspruch 2, **dadurch gekennzeichnet, dass** die ersten Lichtquellen (54) so angeordnet sind, dass sie durch Reflexion an einer spiegelnden, ebenen Probenoberfläche (12), an der das Gehäuse (18) angeordnet ist, auf einen Sensor (42) der Kamera (38) abgebildet werden und/oder dadurch, dass die zweiten Lichtquellen (56, 58, 60) so angeordnet sind, dass sie durch Reflexion an einer spiegelnden, ebenen Probenoberfläche (12), an der das Gehäuse (18) angeordnet ist, nicht auf einen Sensor (42) der Kamera (38) abgebildet werden.

4. Vorrichtung (14) nach einem der Ansprüche 1 bis 3, **dadurch gekennzeichnet, dass** die Lichtquellen (54, 56, 58, 60) oder ein Teil der Lichtquellen in einer abwickelbaren Fläche angeordnet sind, insbesondere in einer Mantelfläche eines Zylinders oder Kegels.

5. Vorrichtung (14) nach einem der Ansprüche 1 bis 4, **dadurch gekennzeichnet, dass** die Lichtquellen (54, 56, 58, 60) oder ein Teil der Lichtquellen (54, 56, 58, 60) auf einer flexiblen Platine (62) angeordnet sind, insbesondere auf einer flexiblen Platine (62), die zur Fixierung ihrer Anordnung relativ zu dem Gehäuse (18) flächig verklebt ist.

6. Vorrichtung (14) nach Anspruch 5, **dadurch gekennzeichnet, dass** eine Ansteuerungselektronik (72) für die auf der flexiblen Platine (62) angeordneten Lichtquellen (54, 56) entweder auf einem nicht-gekrümmten Teil der flexiblen Platine (62) angeordnet ist oder auf einem von der flexiblen Platine (62) verschiedenen Träger, der über elektrische Leitungen mit der flexiblen Platine (62) verbunden ist.

7. Vorrichtung (14) nach einem der Ansprüche 1 bis 6, **dadurch gekennzeichnet, dass** die Lichtquellen (54, 56, 58, 60) oder ein Teil der Lichtquellen (54, 56, 58, 60) Bildpunkte eines Bildschirms sind, insbesondere eines OLED-Bildschirms.

8. Vorrichtung (14) nach einem der Ansprüche 1 bis 7, **dadurch gekennzeichnet, dass** die Lichtquellen (54, 56, 58, 60) oder ein Teil der Lichtquellen (54, 56, 58, 60) Infrarotlicht ausstrahlen.

9. Vorrichtung (14) nach einem der Ansprüche 1 bis 8, **dadurch gekennzeichnet, dass** die Dosiereinrichtung (28) dazu ausgebildet ist, die Flüssigkeit als kontinuierlichen Strahl oder Folge von Tröpfchen auf die Probenoberfläche (12) aufzubringen.

10. Vorrichtung (14) nach einem der Ansprüche 1 bis 9, **dadurch gekennzeichnet, dass** die Dosiereinrichtung (28) dazu ausgebildet ist, die Flüssigkeit entlang einer im Wesentlichen senkrecht zur Probenoberfläche (12) verlaufenden Richtung auf die Probenoberfläche (12) zu transportieren.

11. Vorrichtung (14) nach einem der Ansprüche 1 bis 10, **dadurch gekennzeichnet, dass** die Austrittsöffnung (32) an einem Ende einer Dosierkanüle (34) ausgebildet ist, die in den Hohlraum (26) hineinragt und/oder dadurch, dass die Dosiereinrichtung (28) einen beweglichen Abschnitt aufweist, an dem die Austrittsöffnung (32) angeordnet ist, wobei der bewegliche Abschnitt ganz oder teilweise aus dem Hohlraum (26) herausbewegbar ist.

12. Vorrichtung (14) nach einem der Ansprüche 1 bis 11, **dadurch gekennzeichnet, dass** das Gehäuse (18) einen an dem Gehäuse (18) befestigten Adapter aufweist, wobei der Adapter eine Aufnahme für eine Probe (10) mit einer definierten Geometrie aufweist.

13. Vorrichtung (14) nach einem der Ansprüche 1 bis 12, **dadurch gekennzeichnet, dass** die Vorrichtung (14) eine weitere Kamera aufweist, die dazu ausgebildet ist, eine Reflexion der Lichtquellen (54, 56, 58, 60) an der Oberfläche des Tropfens (16) zu erfassen, wobei die Kamera (38) und die weitere Kamera unterschiedliche Blickrichtungen aufweisen.

14. Vorrichtung (14) nach einem der Ansprüche 1 bis 13, **dadurch gekennzeichnet, dass** die Vorrichtung (14) eine Abstandsmesseinrichtung zur Bestimmung eines Abstands der Vorrichtung (14) von einer Probenoberfläche (12) aufweist, wobei die Abstandsmesseinrichtung insbesondere einen Laser (78) aufweist, dessen auf die Probenoberfläche (12) gerichtetes Licht von der Kamera (38) und/oder von der weiteren Kamera erfasst wird.

15. Vorrichtung (14) nach einem der Ansprüche 1 bis 14, **dadurch gekennzeichnet, dass** die Kamera (38) einen Sensor (42) mit einer Sensorebene (48) und ein Objektiv (40) mit einer Objektivebene (46) aufweist, wobei sich die Sensorebene (48), die Objektivebene (46) und eine Objektebene (50), die einer Probenoberfläche (12), an der das Gehäuse (18) angeordnet ist, entspricht, in einer gemeinsamen Geraden (52) schneiden.

## Claims

1. A device (14) for detecting a geometry of a drop (16) arranged on a sample surface (12), wherein the device (14) comprises the following:
• a metering apparatus (28) which is designed to arrange liquid in the form of a drop (16) on the sample surface (12),
• a plurality of light sources (54, 56, 58, 60), and
• a camera (38) which is designed to detect a reflection of the light sources (54, 56, 58, 60) on the surface of the drop (16), **characterized in that**
• the device (14) comprises a housing (18) having a recess (24) which forms a cavity (26) separated from the surroundings when the housing (18) is arranged on a flat sample surface (12),
• the light sources are arranged in the cavity (26), wherein the light sources (54, 56, 58, 60) cover a solid angle of at least π/2 steradians (sr) when viewed from a point on a flat sample surface (12), and
• the metering apparatus (28) comprises a liquid reservoir (30) and an outlet opening (32) arranged inside the cavity (26).

2. The device (14) according to claim 1, **characterized in that** the light sources (54, 56, 58, 60) comprise multiple first light sources (54) and multiple second light sources (56, 58, 60), wherein the first light sources (54) are smaller and/or are arranged at shorter distances from one another than the second light sources (56, 58, 60).

3. The device (14) according to claim 2, **characterized in that** the first light sources (54) are arranged such that they are imaged on a sensor (42) of the camera (38) by means of reflection on a reflective, flat sample surface (12) on which the housing (18) is arranged, and/or **in that** the second light sources (56, 58, 60) are arranged such that they are not imaged on a sensor (42) of the camera (38) by means of reflection on a reflective, flat sample surface (12) on which the housing (18) is arranged.

4. The device (14) according to any one of claims 1 to 3, **characterized in that** the light sources (54, 56, 58, 60) or some of the light sources are arranged in a developable surface, in particular in a lateral surface of a cylinder or cone.

5. The device (14) according to any one of claims 1 to 4, **characterized in that** the light sources (54, 56, 58, 60) or some of the light sources (54, 56, 58, 60) are arranged on a flexible circuit board (62), in particular on a flexible circuit board (62) which is glued on in a planar manner in order to fix the arrangement thereof relative to the housing (18).

6. The device (14) according to claim 5, **characterized in that** control electronics (72) for the light sources (54, 56) arranged on the flexible circuit board (62) are arranged either on a non-curved part of the flexible circuit board (62) or on a substrate other than the flexible circuit board (62) that is connected to the flexible circuit board (62) via electrical lines.

7. The device (14) according to any one of claims 1 to 6, **characterized in that** the light sources (54, 56, 58, 60) or some of the light sources (54, 56, 58, 60) are image points of a screen, in particular an OLED screen.

8. The device (14) according to any one of claims 1 to 7, **characterized in that** the light sources (54, 56, 58, 60) or some of the light sources (54, 56, 58, 60) emit infrared light.

9. The device (14) according to any one of claims 1 to 8, **characterized in that** the metering apparatus (28) is designed to apply the liquid onto the sample surface (12) as a continuous jet or a succession of droplets.

10. The device (14) according to any one of claims 1 to 9, **characterized in that** the metering apparatus (28) is designed to transport the liquid onto the sample surface (12) in a direction that extends substantially perpendicularly to the sample surface (12).

11. The device (14) according to any one of claims 1 to 10, **characterized in that** the outlet opening (32) is formed at one end of a metering tube (34) that protrudes into the cavity (26) and/or **in that** the metering apparatus (28) comprises a movable portion on which the outlet opening (32) is arranged, wherein the movable portion can be completely or partially moved out of the cavity (26).

12. The device (14) according to any one of claims 1 to 11, **characterized in that** the housing (18) comprises an adapter fastened to the housing (18), wherein the adapter comprises a receiving portion for a sample (10) with a defined geometry.

13. The device (14) according to any one of claims 1 to 12, **characterized in that** the device (14) comprises an additional camera which is designed to detect a reflection of the light sources (54, 56, 58, 60) on the surface of the drop (16), wherein the camera (38) and the additional camera have different viewing directions.

14. The device (14) according to any one of claims 1 to 13, **characterized in that** the device (14) comprises a distance measuring apparatus for determining a distance between the device (14) and a sample surface (12), wherein the distance measuring apparatus in particular comprises a laser (78), the light of which, which is directed onto the sample surface (12), is detected by the camera (38) and/or by the additional camera.

15. The device (14) according to any one of claims 1 to 14, **characterized in that** the camera (38) comprises a sensor (42) having a sensor plane (48) and a lens (40) having a lens plane (46), wherein the sensor plane (48), the lens plane (46), and an object plane (50), which corresponds to a sample surface (12) on which the housing (18) is arranged, intersect in a common straight line (52).

## Revendications

1. Dispositif (14) pour la détection d'une géométrie d'une goutte (16) disposée sur une surface échantillon (12), le dispositif (14) présentant les éléments suivants :
• un dispositif de dosage (28), lequel est conçu pour agencer du liquide sous la forme d'une goutte (16) sur la surface échantillon (12),
• une multiplicité de sources lumineuses (54, 56, 58, 60) et
• une caméra (38), laquelle est conçue pour détecter une réflexion des sources lumineuses (54, 56, 58, 60) sur la surface de la goutte (16), **caractérisé en ce que**
• le dispositif (14) présente un boîtier (18) avec un évidement (24), lequel forme un espace creux (26) limité par un environnement lors de l'agencement du boîtier (18) sur une surface échantillon plane (12),
• les sources lumineuses sont disposées dans l'espace creux (26), les sources lumineuses (54, 56, 58, 60) couvrant un angle solide d'au moins π/2 stéradiant (sr) vu à partir d'un point d'une surface échantillon plane (12), et
• le dispositif de dosage (28) présente un réservoir de liquide (30) et une ouverture de sortie disposée à l'intérieur de l'espace creux (26).

2. Dispositif (14) selon la revendication 1, **caractérisé en ce que** les sources lumineuses (54, 56, 58, 60) comprennent plusieurs premières sources lumineuses (54) et plusieurs deuxièmes sources lumineuses (56, 58, 60), les premières sources lumineuses (54) étant plus petites ou disposées à des distances les unes des autres inférieures aux distances entre les deuxièmes sources lumineuses (56, 58, 60).

3. Dispositif (14) selon la revendication 2, **caractérisé en ce que** les premières sources lumineuses (54) sont disposées de telle sorte qu'elles sont représentées sur un capteur (42) de la caméra (38) par réflexion sur une surface échantillon plane (12) réfléchissante sur laquelle le boîtier (18) est disposé et/ou **en ce que** les deuxièmes sources lumineuses (56, 58, 60) sont disposées de telle sorte qu'elles ne sont pas représentées sur un capteur (42) de la caméra (38) par réflexion sur une surface échantillon plane (12) réfléchissante sur laquelle le boîtier (18) est disposé.

4. Dispositif (14) selon l'une des revendications 1 à 3, **caractérisé en ce que** les sources lumineuses (54, 56, 58, 60) ou une partie des sources lumineuses sont disposées dans une surface développable, en particulier dans une surface latérale d'un cylindre ou d'un cône.

5. Dispositif (14) selon l'une des revendications 1 à 4, **caractérisé en ce que** les sources lumineuses (54, 56, 58, 60) ou une partie des sources lumineuses sont disposées sur une carte flexible (62), en particulier sur une carte flexible (62) qui est collée sur toute la surface pour la fixation de son agencement relativement au boîtier (18).

6. Dispositif (14) selon la revendication 5, **caractérisé en ce qu'**une électronique de commande (72) pour les sources lumineuses (54, 56) disposées sur la carte flexible (62) est disposée soit sur une partie non courbe de la carte flexible (62) soit sur un support différent de la carte flexible (62), lequel est relié par des lignes électriques avec la carte flexible (62).

7. Dispositif (14) selon l'une des revendications 1 à 6, **caractérisé en ce que** les sources lumineuses (54, 56, 58, 60) ou une partie des sources lumineuses (54, 56, 58, 60) sont des pixels d'un écran, en particulier d'un écran OLED.

8. Dispositif (14) selon l'une des revendications 1 à 7, **caractérisé en ce que** les sources lumineuses (54, 56, 58, 60) ou une partie des sources lumineuses (54, 56, 58, 60) émettent de la lumière infrarouge.

9. Dispositif (14) selon l'une des revendications 1 à 8, **caractérisé en ce que** le dispositif de dosage (28) est conçu pour appliquer le liquide sur la surface échantillon (12) comme un jet continu ou comme une séquence de gouttelettes.

10. Dispositif (14) selon l'une des revendications 1 à 9, **caractérisé en ce que** le dispositif de dosage (28) est conçu pour transporter le liquide sur la surface échantillon (12) dans une direction s'étendant de façon essentiellement verticale par rapport à la surface échantillon (12).

11. Dispositif (14) selon l'une des revendications 1 à 10, **caractérisé en ce que** l'ouverture de sortie (32) est conçue à une extrémité d'une canule de dosage (34), laquelle pénètre dans l'espace creux (26) et/ou **en ce que** le dispositif de dosage (28) présente une partie mobile sur laquelle l'ouverture de sortie (32) est disposée, la partie mobile pouvant être sortie de l'espace creux (26) totalement ou partiellement.

12. Dispositif (14) selon l'une des revendications 1 à 11, **caractérisé en ce que** le boîtier (18) présente un adaptateur fixé sur le boîtier (18), l'adaptateur présentant un accueil pour un échantillon (10) avec une géométrie définie.

13. Dispositif (14) selon l'une des revendications 1 à 12, **caractérisé en ce que** le dispositif (14) présente une caméra supplémentaire, laquelle est conçue pour détecter une réflexion des sources lumineuses (54, 56, 58, 60) sur la surface de la goutte (16), la caméra (38) et la caméra supplémentaire présentant des directions de visée différentes.

14. Dispositif (14) selon l'une des revendications 1 à 13, **caractérisé en ce que** le dispositif (14) présente un dispositif de mesure de distance pour la détermination d'une distance entre le dispositif (14) et la surface échantillon (12), le dispositif de mesure de distance présentant en particulier un laser (78) dont la lumière dirigée sur la surface échantillon (12) est détectée par la caméra (38) et/ou par la caméra supplémentaire.

15. Dispositif (14) selon l'une des revendications 1 à 14, **caractérisé en ce que** la caméra (38) présente un capteur (42) avec un plan de capteur (48) et un objectif (40) avec un plan d'objectif (46), le plan de capteur (48), le plan d'objectif (46) et un plan d'objectif (50), lequel correspond à une surface échantillon (12) sur laquelle le boîtier (18) est disposé, s'intersectant selon une droite commune.
